# EUROPEAN PATENT APPLICATION

(11) **EP 4 403 241 A1**
(43) Date of publication of application: **24.07.2024**
(21) Application number: 22869642.3
(22) Date of filing: 01.06.2022
(51) Int. Cl.: B01D 39/16, D01D 5/08, D01D 5/098

(54) **DEPTH FILTER**

(30) Priority: 17.09.2021 JP 2021151688
(71) Applicant: JNC Corporation, Chiyoda-ku Tokyo 100-8105 (JP); JNC FILTER CO., LTD., Osaka-shi Osaka 530-6108 (JP)
(72) Inventor: MINEO Ryota, Moriyama-shi Shiga 524-0001 (JP); TAKANA Akitomo, Moriyama-shi Shiga 524-0001 (JP); NAKAMURA Yoshihiro, Moriyama-shi Shiga 524-0001 (JP); YAMAGUCHI Osamu, Moriyama-shi Shiga 524-0001 (JP)
(74) Representative: Becker, Eberhard
(86) International application number: PCT/JP2022/022341
(87) International publication number: WO 2023/042493

(57) **Abstract**

The present invention addresses the problem of providing a depth filter which has excellent filtration accuracy with respect to a fluid that contains fine particles and coarse particles and has a wide particle size distribution, and which has high liquid permeability, while maintaining a low filtration pressure, thereby being capable of performing filtration at a high flow rate. The present invention provides a depth filter which is formed by rolling a fiber assembly into a cylinder, the fiber assembly being formed of melt blown fibers which are formed of a thermoplastic resin A and melt blown fibers which are formed of a thermoplastic resin B that has a lower melting point than the thermoplastic resin A. This depth filter has a gradient where the average fiber diameter of the melt blown fibers which are formed of the thermoplastic resin A and the average fiber diameter of the melt blown fibers which are formed of the thermoplastic resin B continuously decrease from the outer circumference toward the inner circumference of the cylinder of the depth filter; and the average fiber diameters of the melt blown fibers which are formed of the thermoplastic resin A and the melt blown fibers which are formed of the thermoplastic resin B are decreased from the range of 20 µm to 1 µm to the range of 0.99 µm to 0.1 µm.

## Description

### [Technical Field]

The present invention relates to a depth filter for filtering fluids containing fine particles.

### [Background Art]

In recent years, because of the need for smaller size and higher performance in electronic devices, built-in electronic components have been required to have a smaller height, and there has been a tendency for each constituent member to become thinner and multilayered. Because the presence of foreign matter having a large particle size relative to the thinness of a member impairs the uniformity of the thickness, coarse particles are removed by filtration in a step before processing and molding.

Furthermore, as members tend to become thinner, particle sizes that are considered coarse particles are becoming smaller than those of the related art, and highly-accurate depth filters are increasingly being used.

Meanwhile, since members are formed into compositions by mixing various raw materials together, there tends to be foreign matter having various particle sizes contained and a wide particle size distribution.

When a fluid containing a composition having such a wide particle size distribution is filtered using a highly-accurate filter designed to capture fine particles, filtration pressure increases quickly, and thus a high filtration pressure is applied to the filter, which is likely to cause push-out in which particles captured by filter media flow out. Furthermore, when filtration continues and the filtration pressure increases, there is a problem of escape of captured foreign matter due to compaction of filter media themselves.

In general, in filters having higher accuracy, pressure resistance performance tends to become lower, which is likely to cause the above-mentioned phenomenon. Therefore, the final stage of filtration requires careful attention, which is extremely bothersome to operators in managing filtration steps.

A flow rate may be reduced to avoid high filtration pressure, but in this case, the amount of handling per hour also decreases, resulting in a problem of low productivity.

As described above, highly-accurate depth filters of the related art have defects caused by high filtration pressure.

Various depth filters have been developed to solve these problems. For example, the following depth filters have been proposed: a multi-stage layer depth filter which filters fluids having a wide particle size distribution while capturing fine particles, and which is formed by winding a nonwoven fabric formed of coarse fibers around the outer side and winding ultra-fine fibers around the inner side; and a multilayer depth filter having continuous fiber diameter gradient (Patent Literature 1). Because such a multilayer depth filter captures coarse particles at the outer side and captures particles and gels which are smaller than the coarse particles at the inner side, the multilayer depth filter is thought to perform highly-accurate filtration while relatively suppressing an increase in filtration pressure.

However, the current situation is that depth filters of the related art cannot cope with the case of filtering recent filtration target materials that have become highly concentrated and highly viscous, and therefore a filter capable of highly-accurate filtration and allowing low pressure loss even with respect to fluids having a wide particle size distribution is desired.

### [Citation List]

### [Patent Literature]

[Patent Literature 1]
PCT International Publication No. WO1998/013123

### [Summary of Invention]

### [Technical Problem]

With the foregoing in view, an objective of the present invention is to provide a depth filter that not only has excellent fine particle capturing performance due to excellent filtration accuracy with respect to a fluid having a wide particle size distribution, but also is capable of performing filtration at a high flow rate due to high liquid permeability while maintaining a low filtration pressure.

### [Solution to Problem]

While addressing the above problem, the inventors of the present invention found that, for a fiber assembly wound around a filter, by continuously changing a fiber diameter to make it thinner to increase a fiber diameter gradient and by continuously changing an average areal weight to make it lower between filter medium layers from a pre-filtration layer to a micro-filtration layer, a filtration pressure can be kept low while maintaining a high filtration accuracy, thereby completing the present invention.

That is, the present invention has the following configuration.
[1] A depth filter,
   in which the depth filter is formed by winding a fiber assembly therearound into a cylindrical shape, the fiber assembly being formed of melt blown fibers formed of a thermoplastic resin A and melt blown fibers formed of a thermoplastic resin B having a lower melting point than the above-mentioned thermoplastic resin A,
   the depth filter has a gradient in which an average fiber diameter of the above-mentioned melt blown fibers formed of the thermoplastic resin A and an average fiber diameter of the above-mentioned melt blown fibers formed of the thermoplastic resin B continuously decrease from an outer circumference toward an inner circumference of a cylinder of the above-mentioned depth filter, and
   the average fiber diameters of the above-mentioned melt blown fibers formed of the thermoplastic resin A and the above-mentioned melt blown fibers formed of the thermoplastic resin B decrease from a range of 20 µm to 1 µm to a range of 0.99 µm to 0.1 µm.
[2] The depth filter according to [1],
   in which a layer constituted such that the average fiber diameters of the above-mentioned melt blown fibers formed of the thermoplastic resin A and the above-mentioned melt blown fibers formed of the thermoplastic resin B are in the range of 20 µm to 1 µm is a pre-filtration layer, and a layer constituted such that the average fiber diameters of the above-mentioned melt blown fibers formed of the thermoplastic resin A and the above-mentioned melt blown fibers formed of the thermoplastic resin B are in the range of 0.99 µm to 0.1 µm is a micro-filtration layer,
   the pre-filtration layer is provided at an outermost circumferential part of the depth filter having the cylindrical shape, and the micro-filtration layer is provided at an inner circumferential part of the depth filter having the cylindrical shape, and
   a nonwoven fabric formed of the above-mentioned melt blown fibers formed of the thermoplastic resin A and the above-mentioned melt blown fibers formed of the thermoplastic resin B is wound from the pre-filtration layer at the outermost circumferential part toward the micro-filtration layer at the inner circumferential part having a cylindrical shape, while an average areal weight continuously decreases in a range of 100 g/m² to 1 g/m².
[3] The depth filter according to [2], in which a support layer is provided, the support layer being formed by continuously increasing the average fiber diameter and increasing the average areal weight toward an inner circumferential part with respect to the micro-filtration layer.
[4] The depth filter according to any one of [1] to [3], in which the fiber assembly is thermally fused between wound layers of the fiber assembly.
[5] The depth filter according to any one of [1] to [4], containing a fiber assembly having an average areal weight of 20 g/m² or less.
[6] The depth filter according to [1], in which the above-mentioned thermoplastic resin A is polypropylene having a melt mass flow rate of 500 g/10 minute or more and a melting point of 160°C or higher, and the thermoplastic resin B is a propylene copolymer having a melting point of 150°C or lower.
[7] The depth filter according to [6], in which the above-mentioned polypropylene is polypropylene polymerized from a metallocene catalyst.

### [Advantageous Effects of Invention]

According to the present invention, filtration can be performed on a fluid having a wide particle size distribution containing fine particles of various sizes at a low filtration pressure while maintaining a high accuracy. Filtration can be performed at a high flow rate due to low pressure loss with respect to the filter media, and also, the filter media have high pressure resistance even under high filtration pressure, which enables high productivity and stable filtration to be achieved in filtration of fluids.

Since the depth filter of the present invention can be applied to fluids under various conditions, such as a fluid having a wide particle size distribution containing fine particles of various sizes, the depth filter is a filter showing excellent usability in filtration operators. Furthermore, since the pressure resistance of the filter media themselves is high in the depth filter of the present invention, the filter media are unlikely to cause compaction or be pushed out even when a filtration pressure increases, which makes reliability of a filter high.

### [Description of Embodiments]

A depth filter of the present invention is a depth filter formed by winding a fiber assembly therearound into a cylindrical shape, the fiber assembly being formed of melt blown fibers formed of a thermoplastic resin A and melt blown fibers formed of a thermoplastic resin B having a lower melting point than that of the above-mentioned thermoplastic fiber A.

Specifically, the depth filter of the present invention is molded into a cylindrical shape by winding the fiber assembly obtained by a melt blowing method or the like around a core material to fix the fiber assembly thereto while the fiber assembly is in the thermally melted state.

The fiber assembly used in the present invention can be a nonwoven fabric or a web. In the fiber assembly, an average fiber diameter continuously decreases from a pre-filtration layer to a micro-filtration layer, and an average areal weight continuously decreases.

In the present invention, the thermoplastic resin A is referred to as a high melting point resin, and the thermoplastic resin B having a lower melting point than that of the thermoplastic resin A is referred to as a low melting point resin.

The depth filter of the present invention has a gradient in which the average fiber diameter of the above-mentioned melt blown fibers formed of the thermoplastic resin A and/or the average fiber diameter of the above-mentioned melt blown fibers formed of the thermoplastic resin B continuously decrease from the outer circumference toward the inner circumference of the cylinder of the depth filter, and the average fiber diameters of the above-mentioned melt blown fibers formed of the thermoplastic resin A and/or the above-mentioned melt blown fibers formed of the thermoplastic resin B decrease from a range of 20 µm to 1 µm to a range of 0.99 µm to 0.1 µm.

In the present invention, there is no need to distinguish between the melt blown fibers formed of the thermoplastic resin A and the melt blown fibers formed of the thermoplastic resin B, and it is sufficient for the average fiber diameters of the melt blown fibers formed of the thermoplastic resin A and the melt blown fibers formed of the thermoplastic resin B to decrease from a range of 20 µm to 1 µm to a range of 0.99 µm to 0.1 µm.

Furthermore, in the depth filter of the present invention, the pre-filtration layer is formed from a layer formed of a fiber assembly constituted such that the average fiber diameters of the above-mentioned melt blown fibers formed of the thermoplastic resin A and the above-mentioned melt blown fibers formed of the thermoplastic resin B are in a range of 20 µm to 1 µm, and the micro-filtration layer is formed from a layer formed of a fiber assembly constituted such that the average fiber diameters of the above-mentioned melt blown fibers formed of the thermoplastic resin A and the above-mentioned melt blown fibers formed of the thermoplastic resin B are in a range of 0.99 µm to 0.1 µm.

Furthermore, in the depth filter of the present invention, a nonwoven fabric formed of the above-mentioned melt blown fibers formed of the thermoplastic resin A and the above-mentioned melt blown fibers formed of the thermoplastic resin B is wound from the pre-filtration layer at the outermost circumferential part toward the micro-filtration layer at the inner circumferential part having a cylindrical shape, while the average areal weight of the nonwoven fabric continuously decreases in a range of 100 g/m² to 1 g/m².

The pre-filtration layer is a part that is installed on the upstream side in filtration to capture coarse particles. The micro-filtration layer is part that is installed on the downstream side in filtration to capture minute particles and gel particles which have not been captured by the pre-filtration layer. For example, in the depth filter of the present invention, when a nonwoven fabric is used as the fiber assembly, the average fiber diameter of the nonwoven fabric is large in the pre-filtration layer, the average fiber diameter continues to change to become thinner from the upstream side to the downstream side, and the average fiber diameter becomes the smallest in the micro-filtration layer. Furthermore, as necessary, a support layer can be provided downstream of the micro-filtration layer. The support layer can be formed by sequentially decreasing the average areal weight and the average fiber diameter from the outermost circumferential part toward the micro-filtration layer, and thereafter sequentially increasing them from the micro-filtration layer toward a central part.

In the depth filter of the present invention, the pre-filtration layer is disposed on the outermost circumferential part having a cylindrical shape, the micro-filtration layer is disposed on the inner circumferential part having a cylindrical shape. From the pre-filtration layer toward the micro-filtration layer, the average fiber diameter of a fiber sheet such as a nonwoven fabric continuously decreases, and the average areal weight of the fiber sheet continuously decreases, which makes it possible to set an average fiber diameter ratio to 5 times or more. When the pre-filtration layer and the micro-filtration layer are disposed as above, the support layer can be provided at an inner circumferential part of the micro-filtration layer, as necessary. When the support layer is provided, the average areal weight of the nonwoven fabric is continuously changed to become larger from the micro-filtration layer toward the support layer.

The average fiber diameter ratio refers to a ratio of the average fiber diameters of a layer at which the average fiber diameter is maximum in the pre-filtration layer, and a layer at which the average fiber diameter is minimum in the micro-filtration layer (average fiber diameter of layer at which average fiber diameter is maximum in pre-filtration layer/average fiber diameter of layer at which average fiber diameter is minimum in micro-filtration layer). In the present invention, the average fiber diameter ratio is preferably 5 times or more, and is more preferably 10 times or more. Furthermore, between the pre-filtration layer and the micro-filtration layer, the average fiber diameter is gradually changed in a range between a maximum fiber diameter of the pre-filtration layer and a minimum fiber diameter of the micro-filtration layer.

By increasing an average fiber diameter gradient from the pre-filtration layer toward the micro-filtration layer, a slurry having a wide particle size distribution can be efficiently filtered in the entire thickness of the filter media. Since the average fiber diameter gradually becomes thinner and the average areal weight decreases between the filter medium layers from the pre-filtration layer to the micro-filtration layer, pressure loss is less likely to occur, making a fluid to flow smoothly, and also, deep filtration of coarse particles is efficiently performed between the filter medium layers. Furthermore, because a filtration pressure decreases, and because the fibers are fused to each other and the nonwoven fabric layers are fused to each other, push-out is less likely to occur at a high filtration pressure, as a result of which high filtration accuracy is easily maintained for a long time.

The depth filter of the present invention having the above-mentioned structure can be manufactured by spinning using a melt blowing method. The melt blowing method is a method of obtaining an ultra-fine fiber web by blowing a molten thermoplastic resin extruded from a spinning hole in a machine direction or length direction onto a collection conveyor net or a rotating core material (hollow mandrel) using a high-temperature and high-speed gas blown out from the periphery of the spinning hole. At this time, by continuously and simultaneously changing the spinning conditions such as an amount of resin discharged from the spinning hole (discharge amount) and an ejection velocity of blowing stream (or hot air pressure), a desired average fiber diameter and a desired average areal weight can be changed from the pre-filtration layer to the micro-filtration layer.

In the pre-filtration layer, by increasing the discharge amount and decreasing the hot air pressure, the fibers can be made thicker, and also, the average areal weight can be increased. In the process from the pre-filtration layer to the micro-filtration layer, by gradually reducing the discharge amount and increasing the hot air pressure at the same time, the fibers can be gradually made thinner, and also, the average areal weight of the nonwoven fabric can decrease. In the micro-filtration layer, by keeping the hot air pressure and the discharge amount constant, it is possible to make the average fiber diameter the thinnest and make the average areal weight of the nonwoven fabric the smallest in the depth filter.

From the micro-filtration layer to the support layer, by decreasing the hot air pressure and increasing the discharge amount, the fibers can be made thicker, and the average areal weight can be increased. In the support layer, the hot air pressure and the discharge amount can be kept constant for a while. Due to the depth structure created as described above, the pre-filtration layer can capture relatively large-sized foreign matter such as coarse particles. Furthermore, as the average fiber diameter of the pre-filtration layer becomes thicker, liquid permeability and water permeability are higher, and also, pressure loss at the time of liquid permeation can be kept lower.

Since the average fiber diameter gradually becomes thinner and the average areal weight also gradually decreases between layers from the pre-filtration layer to the micro-filtration layer, pressure loss at the time of liquid permeation can be kept low even though a micropore diameter becomes smaller. As a result, the effect of suppressing an increase in filtration pressure in the process of deep filtration of filtrates is obtained. In addition, it is presumed that, because the fibers formed of the thermoplastic resin A and the thermoplastic resin B are firmly fused to each other, push-out is prevented while capturing minute filtrates even under the circumstance of a high filtration pressure.

In the pre-filtration layer, an average fiber diameter of 20 µm to 1 µm can be used, but 15 µm to 1 µm is preferable, and 12 µm to 1 µm is more preferable. When the average fiber diameter is 1 µm or more, this is preferable because then pressure loss does not become excessive as compared to filtration accuracy. Furthermore, when the average fiber diameter is 20 µm or less, this is preferable because then giant particles can be captured by the pre-filtration layer. For the average areal weight, a range of 10 g/m² to 100 g/m² can be used, but 20 g/m² to 80 g/m² is preferable, and 30 g/m² to 60 g/m² is more preferable. When the average areal weight is 10 g/m² or more, this is preferable because then sufficient rigidity can be imparted to a pre-filtration tank. Furthermore, when the average areal weight is 100 g/m² or less, this is preferable because then sufficient heating can be performed to the inner side of the nonwoven fabric at the time of a heat treatment.

For the micro-filtration layer, the average fiber diameter of 0.1 µm to 0.99 µm can be used, but 0.2 µm to 0.8 µm is preferable, and 0.3 µm to 0.7 µm is more preferable. When the average fiber diameter is 0.1 µm or more, this is preferable because then the fiber strength of the micro-filtration layer can be sufficiently maintained. Furthermore, when the average fiber diameter is 0.99 µm or less, this is preferable because then particles having a required size can be captured by the micro-filtration layer. For the average areal weight, a range of 1 g/m² to 40 g/m² can be used, but 3 g/m² to 30 g/m² is preferable, and 5 g/m² to 20 g/m² is more preferable. When the average areal weight is 1 g/m² or more, this is preferable because then a required load can be applied in the subsequent winding step. Furthermore, when the average areal weight is 40 g/m² or less, this is preferable because then it is possible to avoid the average areal weight of the nonwoven fabric from becoming unstable due to generation of fly when melt blowing.

Furthermore, the ratio of the average areal weight of the pre-filtration layer which is close to a maximum to the average areal weight of the micro-filtration layer which is close to a minimum is 1.2 times or more, preferably 1.5 times or more, more preferably 1.8 or more, and further preferably 2 or more. Within this range, the effects of the present invention can be obtained.

In the depth filter of the present invention, the support layer is used as necessary. Among the filter media constituting the depth filter of the present invention, the support layer is provided on the downstream side from the micro-filtration layer. The support layer is provided to retain the shape of the micro-filtration layer and to prevent the filter medium from falling off from the micro-filtration layer. However, the support layer may not be formed when the micro-filtration layer has sufficient shape retainability, when a support such as a separately prepared core material is used to retain the shape of the micro-filtration layer, or when there is no possibility of falling off of the filter medium from the micro-filtration layer. The nonwoven fabric constituting the support layer may be the same as the nonwoven fabric constituting the pre-filtration layer, or a stronger nonwoven fiber assembly such as spunbond nonwoven fabric may be used. The average fiber diameter of nonwoven fabrics formed of melt blown fibers (hereinafter abbreviated as melt blown nonwoven fabric) is not constant, but is normally distributed with a certain width. In the case of these nonwoven fabrics, the average fiber diameter and the void ratio thereof mainly determine filtration accuracy. Therefore, hereinafter, when referring to the fiber diameter of the melt blown nonwoven fabric, it refers to the average fiber diameter unless otherwise specified. When the melt blown nonwoven fabric is used, the average fiber diameter can be set to a value between 0.5 µm and 40 µm depending on selected spinning conditions.

The melt blown fibers used in the depth filter of the present invention can be manufactured using, as a raw material, thermoplastic resins such as polypropylene, a propylene copolymer (for example, a binary or ternary copolymer of ethylene, butene- 1,4-methylpentene, or the like, with propylene as a main component), polyester, polyethylene, polyamide, and low-melting point copolymerized polyester. As raw materials for the melt blown fibers, polypropylene, polyester, polyethylene, polyamide, and copolymers thereof are preferable because the melt viscosity thereof can be easily adjusted to an optimal value depending on temperature, and polypropylene is particularly preferable from the viewpoint of favorable chemical resistance.

A fiber assembly may be obtained by forming the melt blown fibers by combining these thermoplastic resins such that the thermoplastic resin A and the thermoplastic resin B having a melting point lower than that of the thermoplastic resin A are obtained.

For example, when polypropylene is used as the thermoplastic resin A, it is preferable that the polypropylene have a melt mass flow rate of 500 g/10 minute or more and have a melting point of 160°C or higher, and it is more preferable that the polypropylene have a melt mass flow rate of 600 g/10 minute or more and have a melting point of 160°C or higher. When the above-mentioned polypropylene is a polypropylene polymerized from a metallocene catalyst, this is preferable because due to a narrow molecular weight distribution, there is less variation in average fiber diameter, and spinnability is favorable, thereby making processability excellent. Furthermore, it is preferable that the melting point of a thermoplastic resin having a lower melting point than that of the above-mentioned polypropylene be 150°C or lower.

In the present invention, a nonwoven fabric, a web, or the like can be used as the fiber assembly. It is preferable that the fiber assembly be constituted by mixing the thermoplastic low melting point resin and the thermoplastic high melting point resin which have different melting points. As a method of mixing the low melting point resin and the high melting point resin, constituent fibers of a nonwoven fabric or a web may be composite fibers of the low melting point resin and the high melting point resin, fibers formed of the low melting point resin and fibers formed of the high melting point resin may be combined at a spinning stage, or fibers formed of the low melting point resin and fibers formed of the high melting point resin may be blended after spinning.

The mixing ratio of the low melting point resin in the pre-filtration layer may be 10% to 90% by weight, is preferably 20% to 70% by weight, and is more preferably 30% to 50% by weight with respect to the total amount of the low melting point resin and the high melting point resin. In particular, when the content of the low melting point resin is 30% to 50% by weight with respect to the total amount of the low melting point resin and the high melting point resin, excellent strength and shape retainability are obtained when molded as a filter. When the content of the low melting point resin is 10% by weight or more, a thermal bonding point of fibers does not decrease even when a fibrous web is heat-treated, thereby causing less lint and increasing strength. In addition, when the content of the low melting point resin is 90% by weight or less, the low melting point resin that has lost its fiber form due to a heat treatment is less likely to partially block voids between fibers or expand the pore diameter, which are less likely to become a cause of a deterioration in filtration capacity of the filter. Examples of combinations of low melting point resins and high melting point resins include polyethylene/polypropylene, propylene copolymer/polypropylene, low melting point copolymer polyester/polyester, and polyethylene/polyester. Among these, the combinations of propylene copolymer/polypropylene and low melting point copolymer polyester/polyester are preferable because then the bonding force between fibers by a heat treatment is strong, making it possible to obtain a strong filter.

When the layers of the depth filter of the present invention are formed from a nonwoven fabric made of two components having different melting points, fiber intersections are firmly bonded, and thus there is no compaction of the filter media due to increased filtration pressure. Therefore, even when the amount of filtrates captured increases over time, compaction does not occur, making filtration possible under conditions of a mild pressure increase for a relatively long period of time.

In the depth filter of the present invention, since the low melting point resin and the high melting point resin having different melting points are used, a spun nonwoven fabric or web is heated at a temperature higher than the melting point of the low melting point resin using an air-through type heat treatment or a far infrared heater to thermally melt the low melting point resin. Thereby, the fibers containing the low melting point resin are thermally fused to each other, and strong voids between fibers are formed, thereby making it possible to maintain stable filtration performance.

A heat treatment of a web by an air-through type method using hot air is a method of obtaining a nonwoven fabric that is uniform in the thickness direction by passing the web through an oven using a conveyor belt or rotary drum in the oven, and thereafter suctioning one surface of the web to increase a bonding effect. The difference in melting point may be 10°C or higher, is preferably 15°C or higher, more preferably 20°C or higher, and particularly preferably 25°C or higher.

The depth filter of the present invention can be manufactured by heating a nonwoven fabric or web using an air-through type heat treatment, a far infrared heater, or the like, and then winding the nonwoven fabric or web around a core material, for example.

In the depth filter of the present invention, when composite fibers are used, a form thereof is not particularly limited, but composite forms such as concentric sheath-core type, eccentric sheath-core type, parallel type, sea-island type, and radial type can be adopted. In particular, eccentric sheath-core type composite fibers are suitable for imparting bulkiness.

Furthermore, in the depth filter of the present invention, a mixed fiber nonwoven fabric containing at least two types of fibers having different melting points may be used as the nonwoven fabric. In the case of the mixed fiber nonwoven fabric, it is sufficient for the types of fibers contained in the mixed fiber nonwoven fabric be two or more types as long as the effects of the invention can be obtained, or three types, four types, or further more types may also be used. However, when there are three or more types, chemical resistance is determined by the weakest of the three types, for example. Therefore, it is preferable to use two types except when functional fibers or the like are mixed. For example, as a nonwoven fabric containing two types of fibers having different melting points, it is possible to preferably adopt a nonwoven fabric which is formed of low melting point fibers and high melting point fibers, and is obtained by thermally fusing the intersection of the low melting point fibers and the high melting point fibers. The difference in melting point between the low melting point fibers and the high melting point fibers may be 10°C or higher, is preferably 15°C or higher, more preferably 20°C or higher, and particularly preferably 25°C or higher. Preferable examples of the nonwoven fabric include a combination of fibers in which the low melting point fibers are formed of a propylene copolymer and fibers in which the high melting point fibers are formed of polypropylene.

When producing a nonwoven fabric by melt blowing, the types of constituent fibers and a manufacturing method thereof are not particularly limited, and known fibers and manufacturing methods can be used. For example, a melt blown nonwoven fabric can be manufactured by melt-extruding a thermoplastic resin to spin from a melt blown spinneret, further performing blow spinning as an ultra-fine fiber stream using a high-temperature and high-speed gas, collecting ultra-fine fibers as a web using a collection device, heat-treating the obtained web, and thermally fusing the ultra-fine fibers to each other. A high-temperature and high-speed blowing stream used in melt blow spinning usually uses an inert gas such as air and nitrogen gas. A gas temperature of 200°C to 500°C and a pressure in a range of 3 kPa to 120 kPa are generally used, but in the present invention, a gas temperature of 250°C to 400°C and a pressure in a range of 10 kPa to 50 kPa are particularly preferable. Generally, the higher the temperature and the higher the pressure, the smaller the average fiber diameter. However, in the present invention, since the thermoplastic resin having two components are used to set the average fiber diameter to 0.1 µm to 20 µm, the generation of resin particles called shots is prevented by setting the gas temperature to 400°C or lower, and the generation of fiber waste called fly is prevented by keeping the pressure to 50kPa or lower. This is preferable because then the texture of the nonwoven fabric is improved, and a particle collection ability is improved even when the average fiber diameter achieved is the same. When air is used as a gas in the blowing stream, it is sometimes referred to as blowing air.

### <Manufacturing method of depth filter>

Specifically, the depth filter of the present invention can be formed by winding a melt blown nonwoven fabric around a columnar iron rod while thermally fusing the melt blown nonwoven fabric, for example.

In the above-mentioned method, it is sufficient for the temperature of the columnar iron rod be a temperature at which the nonwoven fabric is melted and thermally fused. Furthermore, the speed of manufacturing line is not particularly limited, but when forming a filtration layer, the tension applied to the nonwoven fabric is preferably 10 N/m or less, and it is preferable to perform winding without applying any tension.

The diameter and thickness of the depth filter of the present invention can be appropriately set depending on the desired performance and properties of filtrates. For example, in the case of a depth filter used for slurry filtration in a CMP slurry manufacturing step, the inner diameter is preferably about 23 to 100 mm. By setting the inner diameter to 23 mm or more, a sufficient amount of a liquid flowing toward the inner wall side can be ensured. By setting the inner diameter to 100 mm or less, the depth filter can be made compact. Furthermore, the thickness (= (outer diameter - inner diameter)/2) is preferably 10 mm to 30 mm. By setting the thickness to 10 mm or more, a sufficient change ratio between the average fiber diameter and the average areal weight can be provided. By setting the thickness to 30 mm or less, a depth filter having excellent liquid permeability can be obtained.

The depth filter manufactured as described above is suitably used as a depth filter having a cylindrical shape by cutting it into an appropriate size and attaching end caps to both ends. Furthermore, the above-mentioned depth filter can also be used by enclosing it in a small-sized capsule or the like.

Furthermore, the above-mentioned manufacturing method is merely a broad outline, and in addition to the above-mentioned steps, known steps such as a heat treatment, cooling, a chemical treatment, molding, and washing can be implemented as necessary.

### [Examples]

Hereinafter, the present invention will be described in more detail with reference to examples, but the present invention is not limited thereto.

Measurement methods and definitions of physical property values described in the examples are as follows.

### 1) Measuring method of average fiber diameter

From the cross section of the filter imaged with an electron microscope, the length (diameter) of one fiber in the length direction and the perpendicular direction of the fiber was measured for 100 fibers, and an arithmetic mean value was calculated, which was taken as an average fiber diameter. This calculation was performed using an image processing software "Scion Image" (trade name) of Scion Corporation.

Fibers were selected at random to reduce errors as much as possible in fiber diameter measurement using an electron microscope.

### 2) Measuring method of average areal weight

For the nonwoven fabric obtained by spinning, three points (left side, middle, right side) of a measurement sample obtained by cutting into a circle of 100 cm² were collected in the width direction. The weight of each thereof was measured to obtain a weight per unit area (g/m²), and an arithmetic mean value thereof was taken as an average areal weight.

### 3) MFR of resin

Measurement was performed at a temperature of 230°C and a load of 2.16 kg using a standard die according to the method of K 7210-1: 2014.

### [Example 1]

As the high melting point resin, MF650Y (manufactured by PolyMirae Co., Ltd., MFR: 1800 g/10 minute, melting point of 165°C) was used. As the low melting point resin, SOW0279 (manufactured by Japan Polypropylene Corporation, MFR: 60 g/10 minute, melting point of 140°C) was used.

As a nozzle for melt blowing, a melt blowing spinneret which had 501 holes in total and in which spinning holes for high melting point resin discharging which had a pore diameter of 0.2 mm and spinning holes for low melting point resin discharging were alternately arranged in line was used.

A web was obtained as follows: spinning was performed under the conditions in which the spinning temperature was 370°C, the pressure of blowing air at a temperature of 400°C was continuously changed from an initial value of 11.8 kPa to a maximum of 31.7 kPa, and at the same time, the discharge amount was changed from 40 g/minute to 234 g/minute while using the high melting point resin and the low melting point resin and setting the weight ratio of the two resins to 5:5; blowing was performed onto a conveyor net having a suction device; and winding around a paper tube roll at 9 m/minute was performed.

At this time, when the web at a portion corresponding to the pre-filtration layer and the micro-filtration layer was collected, at the portion corresponding to the pre-filtration layer, the average fiber diameter of the web was 9.9 µm, and the average areal weight was 46.2 g/m², and at the portion corresponding to the micro-filtration layer, the average fiber diameter of the web was 0.63 µm, and the average areal weight was 9.8 g/m².

Subsequently, the webs were heated with a through-air processing machine under the conditions of a conveyor rate of 8.5 m/minute and a set temperature of 137°C, and immediately thereafter, the web used as the micro-filtration layer and the web used as the pre-filtration layer were wound in this order around a core material (iron rod) having an outer diameter of 30 mm. The obtained cylindrical molded product was air-cooled at room temperature, extracted from the core material, and both ends thereof were cut to produce a cylindrical filter having a total length of 245 mm, an outer diameter of 68 mm, and an inner diameter of 30 mm. The void ratio was 74.8%.

Furthermore, both end parts of the filter were sealed with a flat gasket (obtained by cutting polyethylene foam having a foam multiplicity of 3 and a thickness of 3 mm into a doughnut shape) to make the total length 250 mm. The flat gasket and the filter were integrated by thermal bonding.

### [Example 2]

As the high melting point resin, Achieve 6936G2 (manufactured by ExxonMobil Corporation, MFR: 1500 g/10 minute, melting point of 165°C) was used. As the low melting point resin, SOW0279 (manufactured by Japan Polypropylene Corporation, MFR: 60 g/10 minute, melting point of 140°C) was used.

As a nozzle for melt blowing, a melt blowing spinneret which had 501 holes in total and in which spinning holes for high melting point resin discharging which had a pore diameter of 0.2 mm and spinning holes for low melting point resin discharging were alternately arranged in line was used.

A web was obtained as follows: spinning was performed under the conditions in which the spinning temperature was 370°C, the pressure of blowing air at a temperature of 400°C was continuously changed from an initial value of 12.5 kPa to a maximum of 33.1 kPa, and at the same time, the discharge amount was changed from 41 g/minute to 234 g/minute while using the high melting point resin and the low melting point resin and setting the weight ratio of the two resins to 5:5; blowing was performed onto a conveyor net having a suction device; and winding around a paper tube roll at 9 m/minute was performed.

At this time, when the web at a portion corresponding to the pre-filtration layer and the micro-filtration layer was collected, at the portion corresponding to the pre-filtration layer, the average fiber diameter of the web was 8.3 µm, and the average areal weight was 49.8 g/m², and at the portion corresponding to the micro-filtration layer, the average fiber diameter of the web was 0.69 µm, and the average areal weight was 10.5 g/m².

Subsequently, the webs were heated with a through-air processing machine under the conditions of a conveyor rate of 8.5 m/minute and a set temperature of 137°C, and immediately thereafter, the web used as the micro-filtration layer and the web used as the pre-filtration layer were wound in this order around a core material (iron rod) having an outer diameter of 30 mm. The obtained cylindrical molded product was air-cooled at room temperature, extracted from the core material, and both ends thereof were cut to produce a cylindrical filter having a total length of 245 mm, an outer diameter of 68 mm, and an inner diameter of 30 mm. The void ratio was 76.6%.

Furthermore, both end parts of the filter were sealed with a flat gasket (obtained by cutting polyethylene foam having a foam multiplicity of 3 and a thickness of 3 mm into a doughnut shape) to make the total length 250 mm. The flat gasket and the filter were integrated by thermal bonding.

### [Example 3]

As the high melting point resin, MF650Z (manufactured by PolyMirae Co., Ltd., MFR: 2300 g/10 minute, melting point of 165°C) was used. As the low melting point resin, SOW0279 (manufactured by Japan Polypropylene Corporation, MFR: 60 g/10 minute, melting point of 140°C) was used.

As a nozzle for melt blowing, a melt blowing spinneret which had 501 holes in total and in which spinning holes for high melting point resin discharging which had a pore diameter of 0.2 mm and spinning holes for low melting point resin discharging were alternately arranged in line was used.

A web was obtained as follows: spinning was performed under the conditions in which the spinning temperature was 360°C, the pressure of blowing air at a temperature of 400°C was continuously changed from an initial value of 11.9 kPa to a maximum of 32.3 kPa, and at the same time, the discharge amount was changed from 41 g/minute to 236 g/minute while using the high melting point resin and the low melting point resin and setting the weight ratio of the two resins to 5:5; blowing was performed onto a conveyor net having a suction device; and winding around a paper tube roll at 9 m/minute was performed.

At this time, when the web at a portion corresponding to the pre-filtration layer and the micro-filtration layer was collected, at the portion corresponding to the pre-filtration layer, the average fiber diameter of the web was 8.7 µm, and the average areal weight was 42.7 g/m², and at the portion corresponding to the micro-filtration layer, the average fiber diameter of the web was 0.76 µm, and the average areal weight was 9.9 g/m².

Subsequently, the webs were heated with a through-air processing machine under the conditions of a conveyor rate of 8.5 m/minute and a set temperature of 137°C, and immediately thereafter, the web used as the micro-filtration layer and the web used as the pre-filtration layer were wound in this order around a core material (iron rod) having an outer diameter of 30 mm. The obtained cylindrical molded product was air-cooled at room temperature, extracted from the core material, and both ends thereof were cut to produce a cylindrical filter having a total length of 245 mm, an outer diameter of 68 mm, and an inner diameter of 30 mm. The void ratio was 74.8%.

Furthermore, both end parts of the filter were sealed with a flat gasket (obtained by cutting polyethylene foam having a foam multiplicity of 3 and a thickness of 3 mm into a doughnut shape) to make the total length 250 mm. The flat gasket and the filter were integrated by thermal bonding.

### [Example 4]

As the high melting point resin, MF650X (manufactured by PolyMirae Co., Ltd., MFR: 1200 g/10 minute, melting point of 165°C) was used. As the low melting point resin, SOW0279 (manufactured by Japan Polypropylene Corporation, MFR: 60 g/10 minute, melting point of 140°C) was used.

As a nozzle for melt blowing, a melt blowing spinneret which had 501 holes in total and in which spinning holes for high melting point resin discharging which had a pore diameter of 0.2 mm and spinning holes for low melting point resin discharging were alternately arranged in line was used.

A web was obtained as follows: spinning was performed under the conditions in which the spinning temperature was 370°C, the pressure of blowing air at a temperature of 400°C was continuously changed from an initial value of 13.9 kPa to a maximum of 32.1 kPa, and at the same time, the discharge amount was changed from 42 g/minute to 233 g/minute while using the high melting point resin and the low melting point resin and setting the weight ratio of the two resins to 5:5; blowing was performed onto a conveyor net having a suction device; and winding around a paper tube roll at 9 m/minute was performed.

At this time, when the web at a portion corresponding to the pre-filtration layer and the micro-filtration layer was collected, at the portion corresponding to the pre-filtration layer, the average fiber diameter of the web was 9.7 µm, and the average areal weight was 42.7 g/m², and at the portion corresponding to the micro-filtration layer, the average fiber diameter of the web was 0.71 µm, and the average areal weight was 9.9 g/m².

Subsequently, the webs were heated with a through-air processing machine under the conditions of a conveyor rate of 8.5 m/minute and a set temperature of 137°C, and immediately thereafter, the web used as the micro-filtration layer and the web used as the pre-filtration layer were wound in this order around a core material (iron rod) having an outer diameter of 30 mm. The obtained cylindrical molded product was air-cooled at room temperature, extracted from the core material, and both ends thereof were cut to produce a cylindrical filter having a total length of 245 mm, an outer diameter of 68 mm, and an inner diameter of 30 mm. The void ratio was 74.8%.

Furthermore, both end parts of the filter were sealed with a flat gasket (obtained by cutting polyethylene foam having a foam multiplicity of 3 and a thickness of 3 mm into a doughnut shape) to make the total length 250 mm.

The flat gasket and the filter were integrated by thermal bonding.

### [Comparative Example 1]

As a comparative example, Profile II cartridge grade 005 (manufactured by Nihon Pall Ltd.) was used.

### [Comparative Example 2]

### <Manufacture of depth filter using insertion nonwoven fabric obtained by setting average fiber diameter ratio of pre-filtration layer and micro-filtration layer to 7 to 8 times, setting average areal weight ratio to be constant, and then performing compression>

A web was obtained as follows: spinning was performed at a spinning temperature of 360°C while continuously changing a blowing air flow rate at a temperature of 400°C from an initial value of 5.2 Nm³/minute to a maximum of 27 Nm³/minute, and at the same time, setting the discharge amount to 109 g/minute; blowing was performed onto a conveyor net having a suction device; and winding around a paper tube roll at 7.5 m/minute was performed.

At this time, when the web at a portion corresponding to the pre-filtration layer and the micro-filtration layer was collected, at the portion corresponding to the pre-filtration layer, the average fiber diameter of the web was 15.0 µm, and at the portion corresponding to the micro-filtration layer, the average fiber diameter of the web was 2.0 µm, and the average areal weight was 50 g/m².

Furthermore, as the insertion nonwoven fabric, a compressed insertion nonwoven fabric having an average areal weight of 75 g/m², a thickness of 200 µm, and an average fiber diameter of 1.0 µm was manufactured by manufacturing a polypropylene melt blown nonwoven fabric having an average areal weight of 75 g/m², a thickness of 500 µm, and an average fiber diameter of 1.0 µm, and compressing this polypropylene melt blown nonwoven fabric with a flat roll at a temperature of 120°C.

Subsequently, the webs were heated with a through-air processing machine under the conditions of a conveyor rate of 8.5 m/minute and a set temperature of 137°C, and immediately thereafter, the compressed insertion nonwoven fabric, the web used as the micro-filtration layer, and the web used as the pre-filtration layer were wound in this order around a core material (iron rod) having an outer diameter of 30 mm. The obtained cylindrical molded product was air-cooled at room temperature, extracted from the core material, and both ends thereof were cut to produce a cylindrical filter having a total length of 245 mm, an outer diameter of 67 mm, and an inner diameter of 30 mm. The void ratio was 74.3%.

Furthermore, both end parts of the filter were sealed with a flat gasket (obtained by cutting polyethylene foam having a foam multiplicity of 3 and a thickness of 3 mm into a doughnut shape) to make the total length 250 mm. A hot melt adhesive was used for bonding of the flat gasket and filter.

### (Filtration performance evaluation)

As described above, a filtration performance test was performed on the obtained cylindrical filters of Examples 1 to 4 and Comparative Examples 1 and 2. The results of each test are described below.

### <Water permeability>

First, water was passed through a filter housing without attaching a filter, and the relationship between the amount of water passed and the pressure loss before and after housing was obtained to take this value as piping resistance. Subsequently, a filter as a test piece was attached to the filter housing, and the water passage amount and the pressure loss before and after housing were obtained to take this value as temporary pressure loss. Then, a value obtained by subtracting the piping resistance from the temporary pressure loss was defined as a true differential pressure of the test piece. Water was passed at flow rates of 10 L/minute, 20 L/minute, and 30 L/minute. The results are shown in Table 1.

**<Table 1>**

| | Water passage flow rate (L/min) | | |
|---|---|---|---|
| | 10 | 20 | 25 |
| Example 1 | 31 | 70 | 88 |
| Example 2 | 30 | 66 | 86 |
| Example 3 | 30 | 69 | 87 |
| Example 4 | 30 | 68 | 87 |
| Comparative Example 1 | 49 | 104 | 134 |
| Comparative Example 2 | 77 | 164 | 214 |

| | | | |
|---|---|---|---|
| Unit of pressure is kPa·s | | | |

### <Collection efficiency>

For the cylindrical filters of Examples 1 to 4 and Comparative Examples 1 and 2, collection efficiency as collection performance was measured over time according to the test powder and the method described below.

As the test powder, AC dust Fine obtained from the Association of Powder Process Industry and Engineering, Japan (Air Cleaner Fine Test Dust (abbreviated to ACFTD), fine particles manufactured from desert sand), and a JIS test powder 1 (7 types) were used. The particle size distribution was based on the values listed on the website of the Association of Powder Process Industry and Engineering, Japan.

The collection efficiency was obtained using the following definition formula.Collection efficiency (%) = (1 - number of particles having particle size × µm after passing through filter/number of particles having particle size × µm before passing through filter) × 100

The measurement results of the collection efficiency are shown in Table 2.

**<Table 2>**

| | min | 5 | 10 | 15 | 20 | 25 | 30 | 35 | 40 | 45 | 50 | 55 | 60 | 62 |
|---|---|---|---|---|---|---|---|---|---|---|---|---|---|---|
| Example 1 | Collection efficiency (%) | 988 | 99.2 | 99.5 | 99.9 | 99.8 | 99.9 | 99.9 | 99.9 | 99.9 | 99.9 | 99.9 | - | - |
| | Differential pressure (kPa·s) | 31 | 31 | 35 | 57 | 84 | 122 | 159 | 200 | 240 | 285 | 300 | - | - |
| Example 2 | Collection efficiency (%) | 98.6 | 99.0 | 98.6 | 99.5 | 99.6 | 99.7 | 100. 1 | 99.9 | 100.0 | 99.8 | 99.9 | 998 | 99.7 |
| | Differential pressure (kPa·s) | 30 | 30 | 31 | 39 | 56 | 81 | 110 | 139 | 173 | 208 | 245 | 285 | 300 |
| Example 3 | Collection efficiency (%) | 98.7 | 99.1 | 99.4 | 997 | 998 | 99.9 | 99.9 | 99.9 | 99.8 | 99.8 | 99.9 | 99.8 | - |
| | Differential pressure (kPa·s) | 30 | 31 | 38 | 56 | 80 | 112 | 145 | 177 | 214 | 250 | 286 | 300 | - |
| Example 4 | Collection efficiency (%) | 98.7 | 99.1 | 99.3 | 996 | 99.7 | 99.9 | 99.9 | 99.9 | 99.9 | 99.8 | 99.9 | 99.8 | - |
| | Differential pressure (kPa·s) | 30 | 30 | 35 | 50 | 73 | 103 | 130 | 162 | 198 | 233 | 264 | 300 | - |
| Comparative Example 1 | Collection efficiency (%) | 95.9 | 96.5 | 96.5 | 97.0 | 97.5 | - | - | - | - | - | - | - | - |
| | Differential pressure (kPa·s) | 80 | 118 | 172 | 232 | 300 | - | - | - | - | - | - | - | - |
| Comparative Example 2 | Collection efficiency (%) | 98.0 | 98.9 | 98.7 | 98.8 | 99.1 | 99.6 | 99.3 | 50.4 | - | - | - | - | - |
| | Differential pressure (kPa·s) | 73 | 73 | 73 | 73 | 83 | 116 | 160 | 133 | - | - | - | - | - |

### <Changes in differential pressure and filtration accuracy over time due to addition of fine particles>

For the cylindrical filters of Examples 1 to 4 and Comparative Examples 1 and 2, the collection efficiency was successively measured until the filtration pressure reached 300 KPa according to the test powder and the method described below.

ACFTD and JIS 7 types were used as test powders.

The filter was attached to a filtration tester, and water was passed therethrough at a rate of 10 L/minute for 30 minutes.

30L of pure water was put into a tank of the filtration tester, and while stirring with a stirring blade, addition of ACFTD at a rate of 0.2 g/minute and JIS 7 types at a rate of 0.1 g/minute was continued, and a fluid was passed through the filtration tester equipped with a filter at a rate of 10 L/minute. Fluid passage and addition of ACFTD and JIS 7 types were carried out until the differential pressure between an inlet pressure and an outlet pressure reached 300 kPa, and during that time, a fluid was collected from and inlet side and an outlet side of the filter and used as a sample.

For the obtained sample, the number of particles before and after the filter was measured at each addition time using Accusizer 780 APS (manufactured by PSS Japan) (reference document: Filter Guidebook for Users, the Association of Liquid Filtration and Purification Industry).

Table 2 shows the results of particle collection efficiency at each filtration time for a particle size of 0.51 µm in Examples 1 to 4 and Comparative Examples 1 and 2.

From the results in Table 1, it was found that the depth filters of the present invention in Examples 1 to 4 enabled water passage at a lower pressure than that in Comparative Examples 1 and 2.

From the results of the filtration performance test shown in Table 2, it was found that, in the depth filters of the present invention in Examples 1 to 4, filtration was possible in the state of a high level of particle capture for fine particles and a low filtration pressure in the entire section, as compared to Comparative Examples 1 and 2. Furthermore, the depth filters of Examples 1 to 4 maintained high collection efficiency even at a filtration pressure of 300 kPa. As a result, filtration for a long time was possible.

From the results in Table 2, in Comparative Example 1, the capturing rate for particles of 0.51 µm was 98% or more, but immediately after the filtration pressure reached 160 kPa, the filtration pressure rapidly decreased, and when the collection efficiency at this time was measured, it showed a low value. It is thought that this is because the pores of the filter media were expanded due to pressure, and the fine particles escaped.

From the above results, it was found that, when the depth filter of the present invention in which the fiber diameter gradient between the pre-filtration layer and the micro-filtration layer was large and the average areal weight ratio was large was used, even when the addition of fine particles having a wide particle size distribution containing coarse particles is continued, clogging was unlikely to occur, which made it possible to filter particles larger than the particle size to be removed at the time of filtration at a high particle capturing rate of 98% or more over a long time, as compared to the filters of the comparative examples. It was also confirmed that as the filtration pressure increased, the outflow of coarse particles to the filtrate side did not increase.

From the above results, it was found that, when the depth filter of the present invention is used, even when filtering smaller fine particles contained in the test powder containing coarse particles, filtration was possible for a long time while maintaining a high particle capturing rate, as compared to the filters of the comparative examples.

The reason why the depth filter of the present invention showed excellent filtration performance for filtration of liquid materials containing fine particles is presumed as follows: the depth filter of the present invention has a continuous void structure formed by thermally fusing the nonwoven fabric in which the average fiber diameter continuously decreases from the pre-filtration layer toward the micro-filtration layer and the average basis weight continuously decreases, and thereby, the filtrate flowed smoothly, which allowed the pore structure to also function as a suitable sieve, resulting in efficient deep filtration throughout the filter media.

Furthermore, the reason why stable filtration was possible throughout the entire section during the filtration is thought as follows: because the high melting point fibers and the low melting point fibers of the nonwoven fabric were appropriately thermally fused, the pores of the filter media were unlikely to expand even under high pressure. Therefore, in the depth filter of the present invention, even when the filtration pressure increased, no increase in coarse particle escape was observed, which made it possible to maintain particle capturing performance for a long time.

A filter having such filtration performance is suitable for micro-filtration of a liquid material containing coarse particles and having a wide particle size distribution, as in the above-mentioned experiment. Furthermore, such a filter is a highly reliable filter because no increase in coarse particle escape is observed even under high filtration pressure.

## Claims

1. A depth filter,
wherein the depth filter is formed by winding a fiber assembly therearound into a cylindrical shape, the fiber assembly being formed of melt blown fibers formed of a thermoplastic resin A and melt blown fibers formed of a thermoplastic resin B having a lower melting point than the thermoplastic resin A,
the depth filter has a gradient in which an average fiber diameter of the melt blown fibers formed of the thermoplastic resin A and an average fiber diameter of the melt blown fibers formed of the thermoplastic resin B continuously decrease from an outer circumference toward an inner circumference of a cylinder of the depth filter, and
the average fiber diameters of the melt blown fibers formed of the thermoplastic resin A and the melt blown fibers formed of the thermoplastic resin B decrease from a range of 20 µm to 1 µm to a range of 0.99 µm to 0.1 µm.

2. The depth filter according to claim 1,
wherein a layer constituted such that the average fiber diameters of the melt blown fibers formed of the thermoplastic resin A and the melt blown fibers formed of the thermoplastic resin B are in the range of 20 µm to 1 µm is a pre-filtration layer, and a layer constituted such that the average fiber diameters of the melt blown fibers formed of the thermoplastic resin A and the melt blown fibers formed of the thermoplastic resin B are in the range of 0.99 µm to 0.1 µm is a micro-filtration layer,
the pre-filtration layer is provided at an outermost circumferential part of the depth filter having the cylindrical shape, and the micro-filtration layer is provided at an inner circumferential part of the depth filter having the cylindrical shape, and
a nonwoven fabric formed of the melt blown fibers formed of the thermoplastic resin A and the melt blown fibers formed of the thermoplastic resin B is wound from the pre-filtration layer at the outermost circumferential part toward the micro-filtration layer at the inner circumferential part having a cylindrical shape, while an average areal weight continuously decreases in a range of 100 g/m² to 1 g/m².

3. The depth filter according to claim 2, wherein a support layer is provided, the support layer being formed by continuously increasing the average fiber diameter and increasing the average areal weight toward an inner circumferential part with respect to the micro-filtration layer.

4. The depth filter according to any one of claims 1 to 3, wherein the fiber assembly is thermally fused between wound layers of the fiber assembly.

5. The depth filter according to any one of claims 1 to 4, comprising a fiber assembly having an average areal weight of 20 g/m² or less.

6. The depth filter according to any one of claims 1 to 5, wherein the thermoplastic resin A is polypropylene having a melt mass flow rate of 500 g/10 minute or more and a melting point of 160°C or higher, and the thermoplastic resin B is a propylene copolymer having a melting point of 150°C or lower.

7. The depth filter according to claim 6, wherein the polypropylene is polypropylene polymerized from a metallocene catalyst.
